Europäisches Patentamt

European Patent Office

Office européen des brevets

(19)

(11) **EP 1 431 070 A2**

(12) **EUROPÄISCHE PATENTANMELDUNG**

(43) Veröffentlichungstag:
**23.06.2004 Patentblatt 2004/26**

(51) Int Cl.⁷: **B60B 27/00**

(21) Anmeldenummer: 03028401.2

(22) Anmeldetag: **11.12.2003**

(84) Benannte Vertragsstaaten:
**AT BE BG CH CY CZ DE DK EE ES FI FR GB GR
HU IE IT LI LU MC NL PT RO SE SI SK TR**
Benannte Erstreckungsstaaten:
**AL LT LV MK**

(30) Priorität: **18.12.2002 DE 10259156**

(71) Anmelder: **BPW Bergische Achsen KG
51674 Wiehl (DE)**

(72) Erfinder:
• **Leiding, Hans-Josef
  51580 Reichshof (DE)**
• **Goyke, Georg
  51588 Nümbrecht (DE)**

(74) Vertreter: **Christophersen & Partner
Patentanwälte
Feldstrasse 73
40479 Düsseldorf (DE)**

(54) **Radnabe für die Lagerung eines Fahrzeugrades**

(57) Vorgeschlagen wird eine Radnabe für die Lagerung eines Fahrzeugrades auf einer Radachse, wobei die Radnabe zweiteilig mit einem die Lagerung aufnehmenden Nabengrundkörper (2) sowie einem darauf befestigten Nabenflansch (3) aufgebaut ist. Der Nabenflansch (3) ist über einen inneren Flanschabschnitt (21) lösbar mit dem Nabengrundkörper (2), und über einen äußeren Flanschabschnitt (22) lösbar mit der Radfelge (4,4a) und/oder der Bremstrommel bzw. Bremsscheibe des Fahrzeugrades verbunden.

Um eine solche Radnabe unter Verwendung unveränderter Bauteile an zwei unterschiedliche Einpreßtiefen der zu verwendeten Radfelgen anpassen zu können, ist der Nabenflansch (3) in mindestens zwei Montagepositionen an dem Nabengrundkörper (2) so montierbar, daß je nach Montageposition des Nabenflansches (3) die axiale Lage einer an dem Nabenflansch (3) festgelegten Radfelge (4,4a) und/oder Bremstrommel bzw. Bremsscheibe in Bezug auf den Nabengrundkörper (2) eine andere ist.

Fig. 1a

Fig. 1b

EP 1 431 070 A2

**Beschreibung**

Die Erfindung betrifft eine Radnabe für die Lagerung eines Fahrzeugrades auf einer Fahrzeugachse, wobei die Radnabe zweiteilig mit einem das Radlager aufnehmenden Nabengrundkörper sowie einem daran befestigten Nabenflansch aufgebaut ist, der über einen inneren Flanschabschnitt lösbar mit dem Nabengrundkörper, und über einen äußeren Flanschabschnitt lösbar mit der Radfelge und/oder der Bremstrommel bzw. Bremsscheibe des Fahrzeugrades verbunden ist.

Derartige, zweiteilig aus einem Nabengrundkörper und einem Nabenflansch aufgebaute Radnaben sind bekannt, z. B. aus der DE 197 04 353 A1. Bei der in dieser Druckschrift beschriebenen Radnabe wird durch die zweiteilige Bauweise ein vereinfachter Wechsel der Bremsscheibe angestrebt, ohne daß zum Bremsscheibenwechsel das Radlager ausgebaut werden muß. Die Bremsscheibe ist hierzu zusammen mit dem Radnabenflansch an dem Nabengrundkörper verschraubt. Nach dem Ausbau des Radnabenflansches kann die Bremsscheibe über den Nabengrundkörper herausgeschoben werden, die Radnabe selbst einschließlich ihrer Wälzlagerung muß nicht ausgebaut werden. Die Befestigung der Radfelge erfolgt an einem äußeren Flanschabschnitt des Radnabenflansches über Radbolzen, welche von außen her lösbar sind. Hierbei stützt sich die Radfelge von außen gegen eine Anschlußfläche des äußeren Flanschabschnitts. Dieser Anschlußfläche für die Radfelge abgewandt ist der Nabenflansch mit Anlageflächen für die rückseitigen Köpfe der Radbolzen versehen. Diese Anlageflächen sind speziell auf die Gestaltung der Radbolzenköpfe abgestimmt und bewirken insbesondere eine Verdrehsicherung für die Radbolzen.

Geometrie und Anschlußmaße der Radnabe nach der DE 197 04 353 A1 sind darauf abgestimmt, daran in einer einzigen Aufspannung zwei Radfelgen für eine Zwillingsbereifung zu befestigen. Die Verwendung einer anderen Radfelge, ist grundsätzlich nicht möglich.

Zur **Lösung** wird bei einer Radnabe mit den eingangs genannten Merkmalen vorgeschlagen, daß der Nabenflansch in mindestens zwei Montagepositionen an dem Nabengrundkörper so montierbar ist, daß je nach Montageposition des Nabenflansches die axiale Lage einer an dem Nabenflansch festgelegten Radfelge und/oder Bremstrommel bzw. Bremsscheibe in Bezug auf den Nabengrundkörper eine andere ist.

Bei einer solcherart ausgestalteten Radnabe ist daher der Nabenflansch in einer ersten und mindestens einer weiteren Position an dem Nabengrundkörper der Radnabe befestigbar. Auf diese Weise lassen sich unter Verwendung gleicher Teile, nur durch unterschiedliche räumliche Kombination derselben, z. B. zwei verschiedene Radfelgen mit unterschiedlichen Einpreßtiefen verwenden. So kann die Einpreßtiefe bei dem einen montierbaren Felgentyp 0 mm und bei dem anderen montierbaren Felgentyp 120 mm betragen.

Von Vorteil ist die hiermit einhergehende Reduzierung an Bauteilvarianten. Es können ein- und dieselben Bauteile verwendet werden, aus denen sich die Radnabe zusammensetzt. Die Anpassung der Radnabengeometrie z. B. an die Einpreßtiefe der Radnabe erfolgt vielmehr allein durch die Wahl der Montagelage des Nabenflansches, d. h. ob dieser in einer ersten Stellung oder in einer um 180° gedrehten Stellung auf dem Nabengrundkörper montiert wird. Da die Anschlußmaße und -geometrien auf beiden Seiten des Nabenflansches dieselben sind, ist eine wahlweise Montage in beiden Stellungen möglich.

Bei der Herstellung von Fahrzeuglagerungen und Fahrzeugachsen ist mit dieser Variantenreduzierung ein erheblicher logistischer Vorteil verbunden. Insbesondere wird die Möglichkeit eröffnet, erst in einem sehr späten Stadium der Montage die tatsächlich realisierte Achsausführung zu bestimmen. Ferner ergeben sich durch eine größere Anzahl an Gleichteilen Vorteile beim Einkauf, in der Warenlogistik sowie auch später im Ersatzteilgeschäft. Schließlich ermöglicht die Erfindung auch eine spätere Umrüstung auf eine Radfelge mit einer anderen als der ursprünglichen Einpreßtiefe.

Das wichtigste Anwendungsgebiet der Erfindung sind Nutzfahrzeugachsen und insbesondere Achsen für gezogene Schwerlast-Lkw. Derartige Fahrzeuge verwenden Radnaben, die über eine gesonderte oder integrierte Wälzlagerung frei drehbar auf dem starren Achsschenkel des Achsrohres gelagert sind. An dem äußeren Flanschabschnitt des Nabenflansches läßt sich nicht nur die Radfelge befestigen, sondern alternativ oder zusätzlich auch die Bremstrommel bzw. Bremsscheibe des jeweiligen Fahrzeugrades.

Des weiteren wird mit der Erfindung vorgeschlagen, daß der Nabenflansch in einer ersten Ebene einen inneren Flanschabschnitt zum Verbinden mit dem Nabengrundkörper und in einer zweiten, zu der ersten Ebene parallel versetzten Ebene Verbindungsstrukturen zum Verbinden mit der Radfelge bzw. Bremstrommel bzw. Bremsscheibe aufweist, und daß der Nabenflansch sowohl in einer ersten Ausrichtung als auch in mindestens einer weiteren, bezüglich der ersten Ausrichtung um 180° um ein in einer der Ebenen liegenden Achse gedrehten und gegebenenfalls innerhalb der Ebene verdrehten Ausrichtung an dem Nabengrundkörper montierbar ist.

Vorzugsweise stützt sich der innere Flanschabschnitt des Nabenflansches mit einer daran ausgebildeten Anschlußfläche axial gegen eine außen an dem Nabengrundkörper angeformte Stirnfläche ab, und der Nabenflansch ist, der Anschlußfläche an seinem inneren Flanschabschnitt abgewandt, mit einer zweiten Anschlußfläche versehen, wobei zur wahlweisen Festlegung an der Stirnfläche des Nabengrundkörpers beide Anschlußflächen dieselben Anschlußmaße aufweisen.

Vorzugsweise erfolgt die Befestigung des Nabenflansches an dem Nabengrundkörper mittels durch den inneren Flanschabschnitt hindurchgeführter Schrauben oder Schraubbolzen, und beide Seiten des inneren Flanschabschnitts sind mit für ein- und dieselben Schraubenköpfe bzw. Schraubenmuttern passenden Anlageflächen versehen. Bevorzugt wird hierbei eine Ausführungsform, bei der die Enden der Schrauben bzw. Schraubbolzen in axial ausgerichtete Gewindesacklöcher des Nabengrundkörpers eingreifen.

In Bezug auf die Anschlußfläche, mit der der äußere Flanschabschnitt versehen ist, und an der sich die Radfelge bzw. die Bremstrommel bzw. die Bremsscheibe axial abstützt, wird ferner vorgeschlagen, daß der äußere Flanschabschnitt, dieser Anschlußfläche abgewandt, mit einer zweiten Anschlußfläche versehen ist, und daß beide Anschlußflächen zur wahlweisen Festlegung der Radfelge/der Bremstrommel/der Bremsscheibe an jeder der beiden Anschlußflächen dieselben Anschlußmaße bzw. -geometrien aufweisen.

Um den Zufluß von Kühlluft in den Bereich der Bremstrommel bzw. Bremsscheibe zu verbessern, wird ferner mit einer Ausgestaltung der Radnabe vorgeschlagen, daß der Nabenflansch zwischen seinem inneren Flanschabschnitt und seinem äußeren Flanschabschnitt mit Öffnungen versehen ist, wobei die Öffnungen vorzugsweise gleichmäßig verteilt über den Umfang des Nabenflansches angeordnet sind.

Bei einer weiterentwickelten Ausführungsform der Radnabe ist zwischen der Stirnfläche des Nabengrundkörpers und dem inneren Flanschabschnitt des Nabenflanschs ein Befestigungsflansch der Bremstrommel bzw. Bremsscheibe angeordnet. Dies ermöglicht die Befestigung der Bremsscheibe auf einem geringen Anschlußdurchmesser.

Weitere Vorteile und Merkmale der Erfindung ergeben sich aus der nachfolgenden Beschreibung von Ausführungsbeispielen und unter Verwendung der beigefügten Zeichnungen. Darin zeigen:

Fig. 1a    einen hälftigen Schnitt durch eine erste Ausführungsform einer zweiteiligen Radnabe,

Fig. 1b    einen hälftigen Schnitt durch eine zweite Ausführungsform der zweiteiligen Radnabe, wobei sich die zweite Ausführungsform von der ersten Ausführungsform dadurch unterscheidet, daß der Nabenflansch im Vergleich zu Fig. 1a um 180° versetzt auf den Nabengrundkörper aufgesetzt ist,

Fig.2    dieselben Gegenstände einschließlich Erläuterungen zu den geometrischen Verhältnissen und

Fig. 3    einen Schnitt durch eine weitere Ausführungsform der zweiteiligen Radnabe, bei der die Bremsscheibe abweichend von der Ausführungsform nach Fig. 1 a befestigt ist.

Die Zeichnung zeigt bei einer Lkw-Anhängerachse den hier nur gestrichelt dargestellten Achsschenkel 1 des starren Achskörpers, auf dem über eine Wälzlagerung die Radnabe gelagert ist. Die Befestigung der Radnabe auf dem Achsschenkel 1 erfolgt in an sich bekannter Weise über eine zentrale Achsmutter, die aus Gründen der Übersicht nicht näher dargestellt ist.

Die Radnabe ist zweiteilig aufgebaut mit einem Nabengrundkörper 2 und einem darauf aufgesetzten Nabenflansch 3, an dem wiederum die Radfelge 4 des Fahrzeugrades befestigt ist. Der Nabengrundkörper 2 ist bei dem dargestellten Ausführungsbeispiel an seiner Innenseite mit angeformten Laufbahnen 5, 6 für die Wälzkörper 7, 8 eines Wälzlagers versehen. Weiterer Bestandteil der Wälzlager sind Innenringe 9, 10, welche auf entsprechenden Lagersitzen des Achsschenkels 1 aufsitzen. Die Innenringe 9, 10 können auch unter Bildung eines Kompaktlagers miteinander verbunden sein.

Die beiden Laufbahnen 5, 6 des Nabengrundkörpers 2 können mit einer verschleißmindernden Beschichtung versehen sein, um so die Lebensdauer der Wälzlagers zu erhöhen.

Die Außenkontur des Nabengrundkörpers 2 ist auf etwa einem Drittel seiner Länge mit einem Vorsprung bzw. einer Stufe versehen, wodurch sich eine axial nach außen gerichtete Stirnfläche 15 ergibt, welche dem Anschluß des Nabenflansches 3 dient. Rechtwinklig zu der Stirnfläche 15 ist der Nabengrundkörper 2 mit einem vorzugsweise zylindrischen Flanschsitz 16 versehen, welcher den Nabenflansch 3 zentriert. Hierzu sitzt der Nabenflansch 3 mit seinem als Passung gearbeiteten Innenrand 17 auf dem ebenfalls als Passung gearbeiteten Flanschsitz 16 des Nabengrundkörpers 2 auf.

Von der Stirnfläche 15 aus führen Gewindesacklöcher 18 in das Material des Nabengrundkörpers 2. In diese Gewindesacklöcher 18 greifen Schrauben 19 ein, unter deren Verwendung der Nabenflansch 3 auf dem Nabengrundkörper 2 befestigt ist.

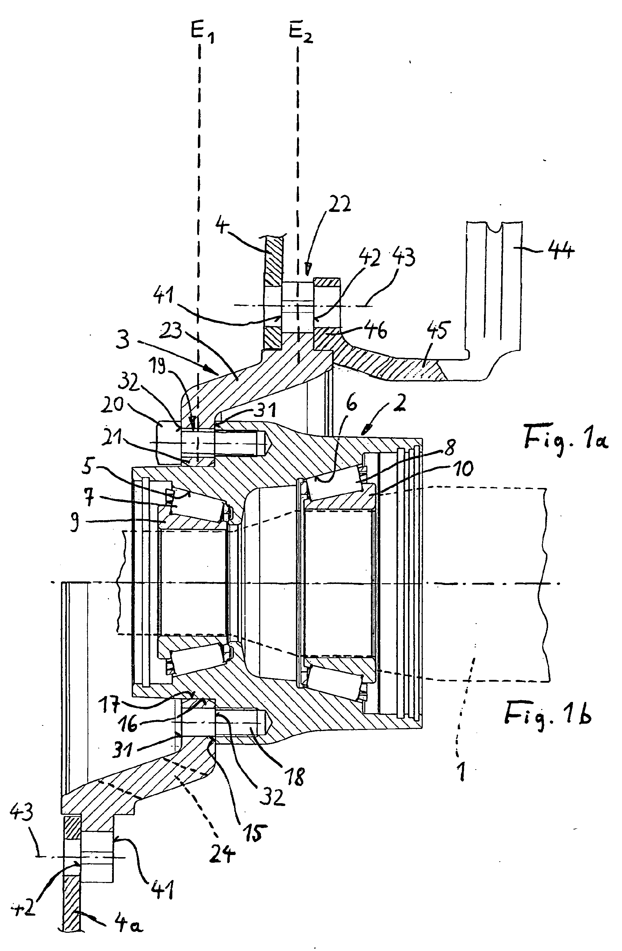

Zur Befestigung des Nabenflansches 3 an dem Nabengrundkörper 2 weist der Nabenflansch einen sich radial erstreckenden inneren Flanschabschnitt 21 auf. Im Bereich seines Außenumfangs ist der Nabenflansch 3 mit einem sich ebenfalls radial erstreckenden äußeren Flanschabschnitt 22 versehen. Die beiden Flanschabschnitte 21, 22 sind, wie die Zeichnung gut erkennen läßt, axial zueinander versetzt, d. h. der äußere Flanschabschnitt 22, an welchem die Radfelge 4 befestigt ist, befindet sich in einer Ebene, welche axial gegenüber jener Ebene versetzt ist, in der sich der innere Flanschabschnitt 21 befindet. Der Nabenflansch 3 ist daher in etwa schalenförmig gestaltet, wobei der Verbindungsbereich 23 zwischen innerem Flanschabschnitt 21 und äußerem Flanschabschnitt 22 mit Durchtrittsöffnungen 24 versehen ist. Durch diese Öffnungen 24 kann Kühlluft zu der innenseitig des Nabenflansches angeordneten Bremstrommel bzw. Bremsscheibe strömen. Alternativ kann erhitzte Luft durch die Öffnungen 24 nach außen entweichen, um so die Wärme besser von der Bremstrommel bzw., im Falle einer Scheibenbremse, von der Bremsscheibe abzuführen. Erfindungsgemäß ist gemäß Fig. 1a der innere Flanschabschnitt 21 auf seiner nach innen weisenden Seite mit einer ersten Anschlußfläche 31, und auf seiner nach außen weisenden Seite mit einer zweiten Anschlußfläche 32 derselben Anschlußgeometrie versehen. Bei der Anordnung nach Fig. 1a stützt sich der Nabenflansch mit seiner ersten Anschlußfläche 31 flächig an der Stirnfläche 15 des Nabengrundkörpers 2 ab. In diesem Fall dient die zweite Anschlußfläche 32 als Anlagefläche für den Kopf 20 der Schraube 19.

In Fig. 1b ist der Nabenflansch 3 demgegenüber um 180° umgekehrt auf den Nabengrundkörper 2 aufgesetzt. Hierbei stützt sich der Nabenflansch mit der zweiten Anschlußfläche 32 an der Stirnfläche 15 des Nabengrundkörpers ab. Umgekehrt bildet die erste Anschlußfläche 31 eine Anlagefläche für den Kopf 20 der Schraube 19. Aus Gründen der Übersicht sind in Fig. 1 b die den Nabenflansch mit dem Nabengrundkörper verbindenden Schrauben 19 nicht eingezeichnet. Vorzugsweise sind die Schrauben 19 gleichmäßig über den Umfang der Radnabe verteilt angeordnet.

Auch der äußere Flanschabschnitt 22 des Nabenflansches 3 ist mit ersten Anschlußflächen 41 sowie diesen gegenüber abgewandten zweiten Anschlußflächen 42 versehen. Bei der in Fig. 1a dargestellten Kombination stützt sich die Radfelge 4 an der ersten, hier außenliegenden Anschlußfläche 41 ab, wohingegen sich bei der Kombination nach Fig. 1 b die hier mit anderer Einpreßtiefe versehene Radfelge 4a an der in diesem Fall nach außen weisenden zweiten Anschlußfläche 42 abstützt.

In Fig. 1 a ist mit $E_1$ jene Ebene bezeichnet, in der sich der innere Flanschabschnitt 21 befindet. Mit $E_2$ ist jene Ebene mittig bezeichnet, in der mittels der Schraubbolzen 43 die Befestigung der Radfelge 4 bzw. einer Bremsscheibe 44 erfolgt. Die Bremsscheibe 44 ist über einen Topf 45 mit einem Befestigungsflansch 46 verbunden, welcher durch die Verschraubung gegen die zweite Anschlußfläche 42 festgelegt ist.

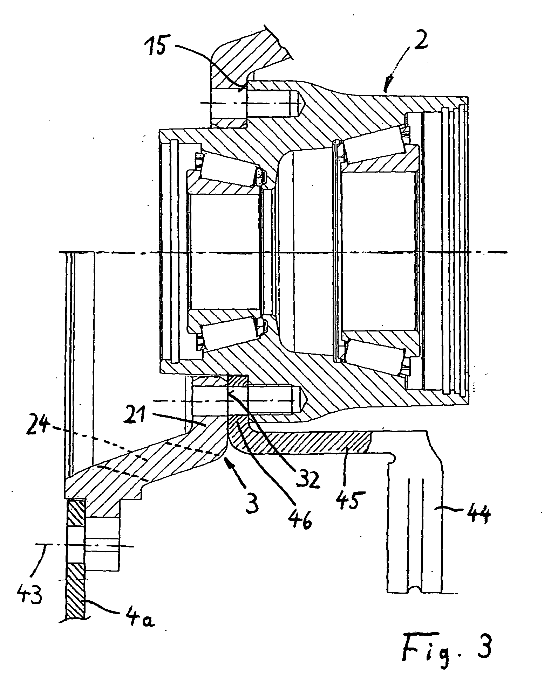

Wie Fig. 3 erkennen läßt, läßt sich die Bremsscheibe 44 aber auch an anderer Stelle befestigen. Gemäß dem unteren Teil der Darstellung Fig. 3 läßt sich der Befestigungsflansch 46 der Bremsscheibe 44 zwischen der nach außen gerichteten Stirnfläche 15 des Nabengrundkörpers 2 und dem inneren Flanschabschnitt 21 des Nabenflanschs 3 anordnen und auf diese Weise gemeinsam mit dem Nabenflansch an dem Nabengrundkörper festspannen. Dies führt zu einer Befestigung der Bremsscheibe 44 auf einem geringen Befestigungsdurchmesser.

Hingegen wird bei den Ausführungsformen nach den Fign. 1 a und 1b die jeweils für das Anliegen der Radfelge 4, 4a nicht genutzte Anschlußfläche (42 in Fig. 1a, 41 in Fig. 1 b) dazu genutzt, dort die Bremsscheibe 44 der Fahrzeugbremse zu befestigen.

Dies erfolgt unter Verwendung derselben, den äußeren Flanschabschnitt 22 durchsetzenden Schraubbolzen 43, die auch die Radfelge 4 bzw. 4a an dem Nabenflansch 3 festlegen. Diese Schraubbolzen 43 sind auf der Zeichnung aus Gründen der Übersicht nur mit ihrer Mittellinie dargestellt.

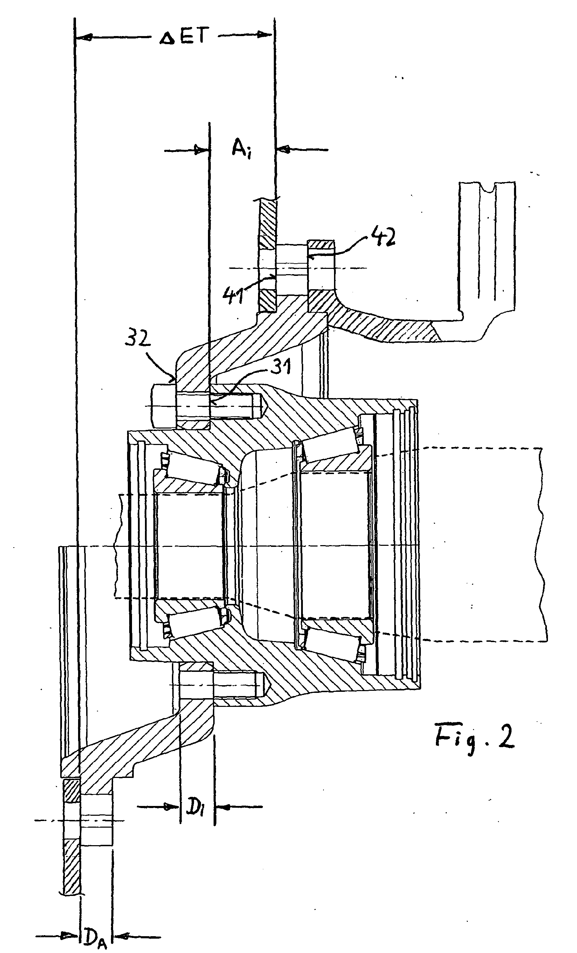

Erfindungsgemäß lassen sich durch entsprechende Anordnung des in zwei Stellungen verwendbaren Nabenflansches 3 sowohl eine Radfelge 4 mit einer ersten Einpreßtiefe, wie auch eine Radfelge 4a mit einer demgegenüber abweichenden Einpreßtiefe an der Radnabe befestigen. Die geometrischen Verhältnisse werden nachfolgend anhand der Fig. 2 näher erläutert.

In Fig. 2 ist mit $D_i$ die Dicke des inneren Flanschabschnitts 21, und mit $D_A$ die Dicke des äußeren Flanschabschnitts 22 bezeichnet. Diese Dicke $D_i$ bzw. $D_A$ entspricht jeweils dem Abstand zwischen den Anschlußflächen 31 und 32 bzw. 41 und 42. Mit $A_i$ ist der Abstand zwischen den inneren Anschlußflächen 31, 41 bezeichnet.

Die Differenz der - auf die Radfelge bezogenen - Einpreßtiefen $\Delta$ ET von z. B. 120 mm zwischen der oberen Ausführung und der unteren Ausführung beträgt dann:

$$\Delta \text{ ET} = 2 \cdot A_i + D_i + D_A$$

Bezugszeichenliste

| | |
|---|---|
| 1 | Achsschenkel |
| 2 | Nabengrundkörper |
| 3 | Nabenflansch |
| 4 | Radfelge, erste Bauform |
| 4a | Radfelge, zweite Bauform |
| 5 | Laufbahn |
| 6 | Laufbahn |
| 7 | Wälzkörper |
| 8 | Wälzkörper |
| 9 | Innenring |
| 10 | Innenring |
| 15 | Stirnfläche |
| 16 | Flanschsitz |
| 17 | Innenrand |
| 18 | Gewindesackloch |
| 19 | Schraube |
| 20 | Kopf der Schraube |
| 21 | innerer Flanschabschnitt |
| 22 | äußerer Flanschabschnitt |
| 23 | Verbindungsbereich |
| 24 | Öffnung |
| 31 | erste Anschlußfläche |
| 32 | zweite Anschlußfläche |
| 41 | erste Anschlußfläche |
| 42 | zweite Anschlußfläche |
| 43 | Schraubbolzen |

| 44 | Bremsscheibe |
| 45 | Topf |
| 46 | Befestigungsflansch |
| $A_i$ | Abstand |
| $D_A$ | Dicke |
| $D_i$ | Dicke |
| $\Delta ET$ | Differenz der Einpreßtiefen |
| $E_1$ | Ebene |
| $E_2$ | Ebene |

**Patentansprüche**

1. Radnabe für die Lagerung eines Fahrzeugrades auf einer Fahrzeugachse, wobei die Radnabe zweiteilig mit einem das Radlager aufnehmenden Nabengrundkörper (2) sowie einem daran befestigten Nabenflansch (3) aufgebaut ist, der über einen inneren Flanschabschnitt (21) lösbar mit dem Nabengrundkörper (2), und über einen äußeren Flanschabschnitt (22) lösbar mit der Radfelge (4, 4a) und/oder der Bremstrommel bzw. Bremsscheibe des Fahrzeugrades verbunden ist,
**dadurch gekennzeichnet,**
**daß** der Nabenflansch (3), in mindestens zwei Montagepositionen an dem Nabengrundkörper (2) so montierbar ist, daß je nach Montageposition des Nabenflansches (3) die axiale Lage einer an dem Nabenflansch (3) festgelegten Radfelge (4, 4a) und/oder Bremstrommel bzw. Bremsscheibe (44) in Bezug auf den Nabgengrundkörper (2) eine andere ist.

2. Radnabe nach Anspruch 1, **dadurch gekennzeichnet, daß** der Nabenflansch (3) in einer ersten Ebene ($E_1$) einen inneren Flanschabschnitt (21) zum Verbinden mit dem Nabengrundkörper (2) und in einer zweiten, zu der ersten Ebene parallel versetzten Ebene ($E_2$) Verbindungsstrukturen zum Verbinden mit der Radfelge (4, 4a) bzw. Bremstrommel bzw. Bremsscheibe (44) aufweist, und daß der Nabenflansch (3) sowohl in einer ersten Ausrichtung als auch in mindestens einer weiteren, bezüglich der ersten Ausrichtung um 180° um ein in einer der Ebenen ($E_1$, $E_2$) liegenden Achse gedrehten und gegebenenfalls innerhalb der Ebene $E_1$, $E_2$ verdrehten Ausrichtung an dem Nabengrundkörper (2) montierbar ist.

3. Radnabe nach Anspruch 1 oder Anspruch 2, **dadurch gekennzeichnet, daß** sich der innere Flanschabschnitt (21) mit einer daran ausgebildeten Anschlußfläche (31) axial gegen eine außen an dem Nabengrundkörper (2) angeformte Stirnfläche (15) abstützt, und daß der Nabenflansch (3), der Anschlußfläche (31) an seinem inneren Flanschabschnitt (21) abgewandt, mit einer zweiten Anschlußfläche (32) versehen ist, und daß zur wahlweisen Festlegung an der Stirnfläche (15) des Nabengrundkörpers beide Anschlußflächen (31, 32) dieselben Anschlußmaße aufweisen.

4. Radnabe nach Anspruch 3, **dadurch gekennzeichnet, daß** die Befestigung des Nabenflansches (3) an dem Nabengrundkörper (2) mittels durch den inneren Flanschabschnitt (21) hindurchgeführter Schrauben (19) oder Schraubbolzen erfolgt, und daß beide Seiten des inneren Flanschabschnitts (21) mit für ein- und dieselben Schraubenköpfe (20) bzw. Schraubenmuttern passenden Anlageflächen versehen sind.

5. Radnabe nach Anspruch 4, **dadurch gekennzeichnet, daß** die Schrauben (19) bzw. Schraubbolzen in axial ausgerichtete Gewindesacklöcher (18) des Nabengrundkörpers (2) eingreifen.

6. Radnabe nach einem der vorangehenden Ansprüche, **dadurch gekennzeichnet, daß** der äußere Flanschabschnitt (22) mit einer Anschlußfläche (41) versehen ist, an der sich die Radfelge (4) bzw. die Bremstrommel bzw. die Bremsscheibe axial abstützt, und daß der äußere Flanschabschnitt (22), der Anschlußfläche (41) abgewandt, mit einer zweiten Anschlußfläche (42) versehen ist, und daß beide Anschlußflächen (41, 42) zur wahlweisen Festlegung der Radfelge/der Bremstrommel/der Bremsscheibe an jeder der beiden Anschlußflächen (41, 42) dieselben Anschlußmaße aufweisen.

7. Radnabe nach einem der vorangehenden Ansprüche, **dadurch gekennzeichnet, daß** der Nabenflansch (3) zwischen seinem inneren Flanschabschnitt (21) und seinem äußeren Flanschabschnitt (22) mit Öffnungen (24) versehen ist, wobei die Öffnungen vorzugsweise gleichmäßig verteilt über den Umfang des Nabenflansches angeordnet sind.

8. Radnabe nach einem der vorangehenden Ansprüche, **dadurch gekennzeichnet, daß** der Nabengrundkörper (2) an seiner Innenseite mit angeformten Laufbahnen (5, 6) für die Wälzkörper (7, 8) eines Wälzlagers versehen ist.

9. Radnabe nach einem der vorangehenden Ansprüche, **dadurch gekennzeichnet, daß** zwischen der Stirnfläche (15) des Nabengrundkörpers (2) und dem inneren Flanschabschnitt (21) des Nabenflanschs (3) eine Befestigungsflansch (46) der Bremstrommel bzw. Bremsscheibe (44) angeordnet ist.

Fig. 1a

Fig. 1b

Fig. 2

Fig. 3